# EUROPÄISCHE PATENTANMELDUNG

(11) **EP 3 967 901 A1**
(43) Veröffentlichungstag der Anmeldung: **16.03.2022**
(21) Anmeldenummer: 21190946.0
(22) Anmeldetag: 12.08.2021
(51) Int. Cl.: F16H 57/04

(54) **ÖLMANAGEMENTSYSTEM**

(30) Priorität: 10.09.2020 DE 102020123621
(71) Anmelder: Deere & Company, Moline, IL 61265 (US)
(72) Erfinder: LANG, MATTHIAS, 68163 Mannheim (DE); MUELLER, DAVID, 68163 Mannheim (DE); GUGEL, RAINER, 68163 Mannheim (DE); RAISCH, STEFAN, 68163 Mannheim (DE); EISENHARDT, CHRISTOPH, 68163 Mannheim (DE)
(74) Vertreter: Dehnhardt, Florian Christopher

(57) **Zusammenfassung**

Es wird ein Ölmanagementsystem für ein Fahrzeug vorgeschlagen, das ein Differentialgehäuse, ein Getriebegehäuse, einen Schmiermitteltank, eine Ansaugleitung, eine Schmiermittelpumpe und eine Luftansaugpumpe aufweist. Das Getriebegehäuse ist mit dem Differentialgehäuse luftdicht verbunden, und es ist ein Schmierstoffdurchlass zwischen dem Getriebegehäuse und dem Differentialgehäuse vorgesehen. Der Schmiermitteltank ist im Differentialgehäuse vorgesehen und weist eine Schmiermittelansaugöffnung in einem unteren Bereich auf.

## Beschreibung

Ölmanagementsysteme für Fahrzeuge müssen eine Vielzahl von Anforderungen erfüllen. Im Öl planschende Bauteile, etwa eines Antriebsstrangs oder Differentials erzeugen unerwünschte Planschverluste, die den Wirkungsgrad des gesamten Antriebs verschlechtern, zu einem erhöhten Kraftstoffverbrauch führen und einen Lufteintrag in das Schmiermittel erzeugen. Der Lufteintrag führt zu einer verringerten Lebensdauer von Schmiermittelpumpen durch Kavitation, unerwünschter Geräuschentwicklung und sogar zu einem Abbruch der Schmiermittelversorgung.

Ebenfalls ist die Schmiermittelmenge richtig festzulegen. Bei einem zu geringen Schmiermittelvolumen wird das Volumen in zu kurzer Zeit umgewälzt, so dass der Lufteintrag nicht abgesondert werden kann und wiederrum zu einem Anreichern von Luftblasen führt und verschäumt. Bei zu großen Volumen erfolgt ein verstärktes Planschen, wodurch abermals Lufteintrag stattfindet. Zur Abfuhr von Wärme und auch zur Sicherstellung des Schmierfilms ist jedoch eine Grundmenge an Schmiermittel festgelegt.

Es ist die Aufgabe der vorliegenden Erfindung ein Ölmanagementsystem bereitzustellen, das eine kontinuierliche Schmierung erlaubt und dabei Planschverluste oder Verschäumen vermeidet.

Es wird ein Ölmanagementsystem für ein Fahrzeug vorgeschlagen, das ein Differentialgehäuse, ein Getriebegehäuse, einen Schmiermitteltank, eine Ansaugleitung, eine Schmiermittelpumpe und eine Luftansaugpumpe aufweist. Das Getriebegehäuse ist mit dem Differentialgehäuse luftdicht verbunden, und es ist ein Schmierstoffdurchlass zwischen dem Getriebegehäuse und dem Differentialgehäuse vorgesehen. Der Schmiermitteltank ist im Differentialgehäuse vorgesehen und weist eine Schmiermittelansaugöffnung in einem unteren Bereich auf. Die Schmiermittelpumpe befördert durch die Ansaugleitung Schmiermittel aus dem Schmiermitteltank, und leitet das Schmiermittel an die Schmiermittelstellen im Differentialgehäuse und Getriebegehäuse. Die Luftansaugpumpe pumpt Luft aus dem Schmiermitteltank in das Getriebegehäuse, so dass im Getriebegehäuse ein Luftüberdruck aufrechterhalten wird. Das Differentialgehäuse weist Umgebungsdruck auf, der niedriger ist, als der Luftüberdruck im Getriebegehäuse, und der Luftdruck im Schmiermitteltank ist niedriger, als der Umgebungsdruck im Differentialgehäuse, so dass durch das Luftdruckgefälle der Schmierstoff aus dem Getriebegehäuse in das Differentialgehäuse und weiter in den Schmiermitteltank geleitet wird, wobei der Schmiermitteldurchlass eine Oberkante aufweist, die dazu ausgelegt ist, den Schmiermittelstand im Normalbetrieb derart zu regulieren, dass dieser unterhalb eines untersten sich drehenden Getriebebauteils liegt.

Die Vorsehung des Schmiermitteltanks im Differentialgehäuse zusammen mit dem Luftdruckgefälle stellt eine verbesserte Schmiermittelversorgung zur Verfügung. Das Differentialgetriebe taucht hierbei nicht mehr in das Schmiermittel bzw. in die Schmiermitteloberfläche ein, die üblicherweise im Stand der Technik ausgebildet ist. Durch die Vorsehung des Schmiermittels im Tank werden Planschverluste des Differentialgetriebes vermieden, so wie ein Versschäumen des Schmiermittels und ein gleichzeitiges Absinken der Schmiermittelspiegels. Der Schmiermittelkreislauf erstreckt sich über mehrere Gehäuseteile hinweg und stellt eine kontinuierliche Schmierung sicher mit einem gleichmäßigen Rücklauf in den Schmiermitteltank. Die Anordnung des Schmiermitteltanks zusammen mit der eingestellten Luftdruckdifferenz führt auch im Bereich des Differentialgehäuses zu einem niedrigen Schmiermittelstand außerhalb und einem hohen Schmiermittelstand innerhalb des Schmiermitteltanks. Die Ausbildung der Oberkante des Schmiermitteldurchlasses stellt den Betrieb des Getriebes ohne Planschverluste sicher, so dass ein Aufschäumen des Schmiermittels verhindert wird.

In einer Ausführung ist der Schmiermitteltank ausgelegt, um eine Differentialanordnung im Differentialgehäuse zu umgeben, derart, dass das Schmiermittel im Tank von der Differentialanordnung getrennt ist.

Die Differentialanordnung besteht aus mehreren miteinander kämmenden Zahnrädern, welche Achsen für den Antrieb mit Leistung versorgen. Die räumliche Trennung des Schmiermittelvorrats im Schmiermitteltank vermeidet, dass die Zahnräder im Schmiermittel eintauchen und reduziert Verluste. Die Zahnräder werden kontinuierlich mit Schmiermittel versorgt, verwirbeln jedoch nicht das gesamte Schmiermittel, welches sich im Tank ansammelt. Die Schmiermittelversorgung erlaubt somit, die Schmiermittelmenge zu reduzieren, wobei gleichzeitig eine ausreichende Versorgung sichergestellt ist.

Bei einer Ausführung weist die Schmiermittelansaugöffnung eine Oberkante auf, die dazu ausgelegt ist, den Schmiermittelstand derart zu regulieren, dass ein Zahnrad der Differentialanordnung des Differentialgehäuses im Normalbetrieb nicht im Schmiermittel planscht.

Die Oberkante kann dabei eine bestimmte Höhe aufweisen, die auf die Verzahnung im Differentialgehäuse abgestimmt ist. Durch das Vermeiden von Planschen wird der Wirkungsgrad des Antriebs erhöht und ein Verschäumen des Schmiermittels verhindert.

Bei einer Weiterbildung ist der Schmiermitteltank in einer C-Form aufgebaut, die dazu geeignet ist, eine Differentialanordnung im Differentialgehäuse zu umschließen.

Die Ausbildung des Schmiermitteltanks in einer C-Form erlaubt die Installation aus einer Einbaurichtung im Differentialgehäuse. Hierbei kann das Differentialgehäuse an einer Seite eine Öffnung aufweisen, durch welche der Schmiermitteltank installiert werden kann. Die Öffnung kann gleichzeitig zu Wartungszwecken genutzt werden. Die C-Form erlaubt es, den Schmiermitteltank platzsparend im Differentialgehäuse unterzubringen, bei gleichzeitig maximalem Aufnahmevolumen für das das Schmiermittel.

Bei einer Ausführung saugt die Luftansaugpumpe die Luft aus einem oberen Bereich des Schmiermitteltanks an.

Die Ansaugung sorgt für einen stetigen Unterdruck zwischen der Schmiermitteloberfläche und dem luftdicht abgeschlossenen Schmiermitteltank. Hierdurch steigt das Niveau der Schmiermitteloberfläche an, so dass ein kontinuierlicher Rückfluss des Schmiermittels in den Schmiermitteltank sichergestellt ist. Durch die Ansaugung ergibt sich ein Luftdruckgefälle über den Schmiermitteltank, das Differentialgehäuse und das Getriebegehäuse, wobei der größte Unterdruck im Vergleich zum Umgebungsdruck im Schmiermitteltank ausgebildet ist. Die Ansaugung sorgt gleichzeitig für ein Absondern von Luftblasen im Schmiermittel, so dass eine gleichmäßige Ausbringung des Schmiermittels erfolgt.

In einer Weiterbildung weist der Schmiermitteltank eine Durchgangsöffnung auf, die dazu ausgelegt ist, den Durchgang einer Welle zu ermöglichen.

Der Schmiermitteltank erlaubt die gleichzeitige Verwendung mit einer durchgehenden Welle im Differentialgehäuse. Dies ermöglicht die Installation auch in Anwendungsfällen, die eine weitere Welle erfordern. Dies erlaubt die Installation einer Zapfwelle im Differentialgehäuse oder die Verwendung des Getriebeschmiersystems in derart gestalteten Differentialgehäusen und Maschinen.

Bei einer Ausführung ist die Schmiermittelpumpe innerhalb des Differentialgehäuses vorgesehen.

Differentialgehäuse weisen ein großes Volumen auf, welches durch die Integration der Schmiermittelpumpe zusammen mit dem Schmiermitteltank platzsparender genutzt werden kann. Ungenutztes Volumen innerhalb des Differentialgehäuses wird reduziert, wobei gleichzeitig Schmiermittelpumpe vor Umwelteinflüssen geschützt ist.

In einer weiteren Ausbildung ist der Schmiermitteltank dazu ausgelegt, eine Differentialanordnung derart zu umgeben, dass der Schmiermitteltank als Spritzschutz dient.

Der Schmiermitteltank umgibt wenigstens ein Zahnrad der Differentialanordnung derart, dass der Zahnkranz von einer Wand des Schmiermitteltanks umgeben ist. Hierbei wird ein Verspritzen des Schmiermittels im Differentialgehäuse vermieden und das Schmiermittel läuft in kürzerer Zeit wieder ab, steht somit in kürzerer Zeit wieder für den Schmiermittelumlauf zur Verfügung.

Bei einer Weiterbildung ist das Differentialgehäuse unmittelbar mit dem Getriebegehäuse luftdicht verbunden.

Die luft- und flüssigkeitsdichte Verbindung stellt die Herstellung des Luftdruckgefälles zwischen dem Getriebe-, dem Differentialgehäuse und dem Schmiermitteltank sicher. Das Luftdruckgefälle sorgt für eine kontinuierlichen und gleichmäßigen verwirbelungsfreien Ab- und Rücklauf des Schmiermittels nachdem dieses an die entsprechenden Schmiermittelzuführungen abgegeben wurde.

In einer weiteren Ausbildung ist die Welle eine Zapfwelle.

Besonders bei Landmaschinen und Traktoren ist eine Zapfwelle vorgesehen, um angehängte Maschinen mechanisch anzutreiben. Mit Hilfe der Auslegung zur Durchleitung einer Zapfwelle im Schmiermitteltank ist eine verbesserte Raumausnutzung ermöglicht. Besondere Umlenkungseinrichtungen für die Zapfwelle werden vermieden und die Wartung wird verringert.

Bei einer Weiterbildung ist die Luftansaugpumpe ungeregelt.

Die Luftansaugpumpe befördert Luft aus dem Schmiermitteltank in das Getriebegehäuse. Der sich einstellende Überdruck im Getriebegehäuse begrenzt den Schmiermittelstand auf die Höhe der Oberkante des Schmiermitteldurchlasses. Die Luftansaugpumpe ist dauerhaft mit dem Antrieb verbunden, wobei eine Abschaltung nicht notwendig ist.

In einer Ausführung ist die Schmiermittelpumpe ungeregelt.

Die Schmiermittelpumpe kann derart betrieben werden, dass das Fördervolumen größer ist, als das Schmiermittelvolumen, das aus dem Getriebegehäuse abfließt. Der Schmiermitteltank kann über ein Überlaufloch verfügen, das dazu dient, einen Luftaustausch mit dem Differentialgehäuse und ein Ablaufen von Schmiermittel zu ermöglichen. Im Normalbetrieb ist eine Befüllung des Schmiermitteltanks sichergestellt.

Bei einer Ausbildung sind die Schmiermittelansaugöffnung und die Schmiermitteldurchlassöffnung so ausgelegt, dass diese die größtmögliche Entfernung voneinander aufweisen.

Die Entfernung stellt während dem Normalbetrieb eine ausreichende Zeit sicher, die das Schmiermittel benötigt, um vorhandene Luftblasen abzugeben. Eine Verschäumung des Schmiermittels wird verhindert und das aktiv im Umlauf sich befindliche Schmiermittel kann ein großes Volumen aufweisen.

Die Erfindung wird weiterhin anhand der folgenden Figuren erläutert. Dabei zeigt:
Figur 1 zeigt eine Gesamtansicht des Aufbaus, mit Getriebe- und Differentialgehäuse;
Figur 2 zeigt eine Teilansicht des Schmiermitteltanks mit der Differentialanordnung und der Welle.

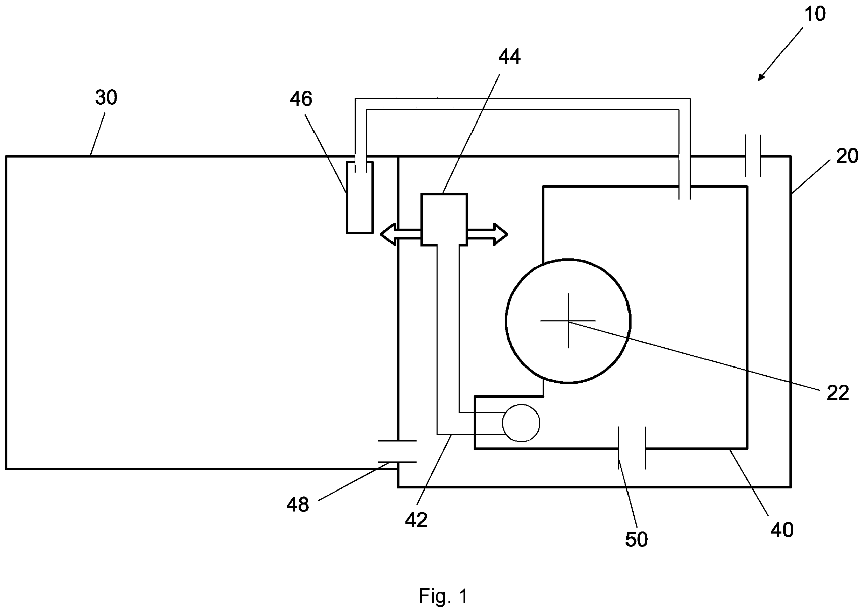

Das Ölmanagementsystem 10 in Figur 1 umfasst ein Differentialgehäuse 20, ein Getriebegehäuse 30, einen Schmiermitteltank 40, eine Ansaugleitung 42, die zu einer Schmiermittelpumpe 44 führt, eine Luftansaugpumpe 46, die Luft aus dem Schmiermitteltank 40 ansaugt und in das Getriebegehäuse fördert und einen Schmierstoffdurchlass, der Schmiermittel vom Getriebegehäuse 30 in das Differentialgehäuse 20 leitet

Das Differentialgehäuse 20 enthält eine Differentialanordnung 22 zum Antrieb von Rädern einer Achse. Der Schmiermitteltank 40 ist im Differentialgehäuse 40 untergebracht, derart, dass dieser Zahnräder der Differentialanordnung 22 umschließt und so den zur Verfügung stehen Bauraum optimal ausnutzt. Der Schmiermitteltank 40 ist entsprechend ausgeformt, so dass dieser in das Differentialgehäuse 20 eingesetzt werden kann. In einem unteren Bereich ist eine Schmiermittelansaugöffnung 50 angebracht, die das Einströmen von Schmiermittel in den Schmiermitteltank 40 ermöglicht. Im Schmiermitteltank 40 ist eine Ansaugleitung 42 untergebracht, die Schmiermittel von einem unteren Bereich des Schmiermitteltanks 40 zu einer Schmiermittelpumpe 44 befördert. Die Schmiermittelpumpe 44 transportiert das Schmiermittel an festgelegte Schmierstellen im Getriebe- und Differentialgehäuse und an weitere Stellen in der Fahrzeugmechanik.

Parallel zu angebrachten Schmiermittelpumpe 44 ist eine Luftansaugpumpe 46 vorgesehen, die Luft aus einem, nicht mit Schmierstoff gefüllten, oberen Bereich des Schmiermitteltanks 40 ansaugt und in das Getriebegehäuse 30 transportiert. Das Getriebegehäuse 30 ist luftdicht mit dem Differentialgehäuse 20 verbunden. Im Getriebegehäuse 30 wird somit ein Luftüberdruck eingestellt, der sowohl über dem Luftdruck im Differentialgehäuse 20 als auch dem Luftdruck im Schmiermitteltank 40 liegt. Das Differentialgehäuse 20 ist über eine Belüftung 24 mit dem Umgebungsdruck beaufschlagt. Aufgrund des Luftdruckgefälles wird das von den Schmiermittelstellen und Bauteilen ablaufende Schmiermittel in den Schmiermitteltank 40 gedrückt. Die Ausbildung eines Schmiermittelsumpfs im Differentialgehäuse wird vermieden.

Die Schmiermittel- und Luftansaugpumpen werden durch eine Steuerung geregelt, die am Differentialgehäuse vorgesehen sein kann oder außerhalb.

Der Schmiermitteltank 40 weist bevorzugt eine C-förmige Gestalt auf. Diese ermöglicht die platzsparende Unterbringung im Differentialgehäuse 20 und die Montage durch eine Öffnung im Differentialgehäuse 20. Der Schmiermitteltank 40 kann darüber hinaus an die Form des Differentialgehäuses in Höhe, Breite und Form angepasst werden. Der Schmiermitteltank 40 kann zusätzlich eine Ablassöffnung aufweisen, um Schmiermittel in größeren Mengen aus dem Schmiermitteltank 40 entnehmen zu können.

Das Getriebegehäuse 30 kann auf jeder Seite des Differentialgehäuses 20 angebracht sein, solang eine luftdichte Verbindungsmöglichkeit mit dem Differentialgehäuse 20 gegeben ist.

Die Schmiermittelpumpe 44 kann im Differentialgehäuse 20 untergebracht sein. Dies kann jedoch auch außerhalb des Differentialgehäuses 20 montiert sein, solange die Absaugung von Schmiermittel aus dem Schmiermitteltank 40 sichergestellt ist.

Die Luftansaugpumpe 46 kann innerhalb oder außerhalb des Differentialgehäuses 20 angebracht sein, solange sichergestellt ist, dass die Luft aus dem Schmiermitteltank 40 abgesaugt und in das Getriebegehäuse 30 gepumpt wird.

Der Schmierstoffdurchlass 48 befindet sich zwischen dem Getriebegehäuse 30 und dem Differentialgehäuse 20 und lässt den Schmierstoff von einem unteren Bereich des Getriebegehäuses 30 in das Differentialgehäuse 20 fließen. Durch den unterschiedlichen Luftdruck wird das Schmiermittel in das Differentialgehäuse 20 gedrückt und fließt weiter in die Ansaugöffnung 50 des Schmiermitteltanks 40.

Die obere Kante des Schmierstoffdurchlasses 48 befindet sich auf einer niedrigeren Position bei horizontaler Ausrichtung des Ölmanagementsystems 10, als das niedrigste rotierende Bauteil im Getriebegehäuse 30. Das Getriebegehäuse 30 enthält eine Vielzahl von Wellen und Verzahnungen, sowie Kupplungen, die in Figur 1 nicht dargestellt sind. Durch die Rotation und das Verteilen des Schmiermittels erfolgt ein Rückfluss des Schmiermittels in den unteren Bereich des Getriebegehäuses 30. Um ein Ansammeln des Schmiermittels und die Ausbildung eines Schmiermittelsumpfes im Getriebegehäuse 30 zu vermeiden, wird die Höhe oder Position der Oberkante des Schmierstoffdurchlasses 48 so gewählt, dass keine Bauteile im Schmiermittel planschen können, wodurch ein Verschäumen verhindert wird.

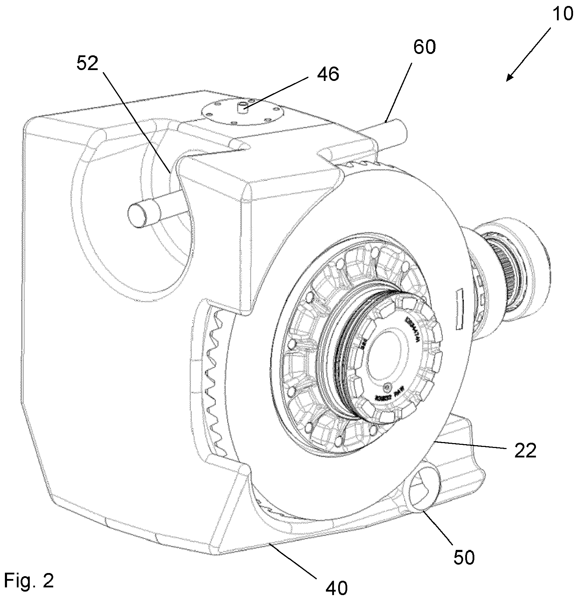

Figur 2 zeigt eine Detailansicht mit der Differentialanordnung 22. Der Schmiermitteltank 40 weist eine C-förmige Grundstruktur auf, die es weiterhin ermöglicht, diesen aus einer Richtung zu montieren. Dafür kann im Differentialgehäuse 20 eine entsprechende Öffnung vorgesehen sein.

Der Schmiermitteltank 40 ist derart ausgeformt, dass dieser um ein Zahnrad der Differentialanordnung 22 einen umschließenden, überstehenden Rand ausbildet. Dies dient gleichzeitig einem Spritzschutz und verhindert das weitflächige feine Verteilen des Schmiermittels durch die Rotation der Differentialanordnung 22. Der Schmiermitteltank weist in einem unteren Bereich eine Schmiermittelansaugöffnung 52 auf, die dazu dient, das Schmiermittel durch die Schmiermittelpumpe 44 anzusaugen und an die Schmierstellen zu leiten.

Der Schmiermitteltank 40 weist eine Durchgangsöffnung 52 auf, die den Schmiermitteltank 40 vollständig durchdringt. Die Öffnung 52 ermöglicht die Durchleitung einer Welle 60, die gleichzeitig durch das Differentialgehäuse verlegt ist. Mittels der Durchgangsöffnung 52 kann beispielsweise eine Zapfwelle vorgesehen sein, die zum weiteren Antrieb von angehängten Maschinen dient. Die Durchgangsöffnung 52 ermöglicht die platzsparende Auslegung des Schmiermitteltanks 40 und des Differentialgehäuses 20.

Die Welle 60 und die Durchgangsöffnung 52 können oberhalb oder unterhalb der Achse der Differentialanordnung 22 ausgebildet sein.

Auf einer Oberseite des Schmiermitteltanks 40 befindet sich die Ansaugöffnung für die Luftansaugpumpe 46. Durch die Anbringung in einem oberen Bereich wird die direkte Ansaugung von Schmiermittel vermieden.

Durch das Ölmanagementsystem 10 wird eine großflächige Schmiermittelansammlung am Boden des Differentialgehäuses 20 vermieden. Die Differentialanordnung 22 taucht nicht in das Schmiermittel ein, sondern wird lediglich benetzt, womit ein Verschäumen und Verteilen des Schmiermittels verhindert wird. Das Schmiermittel läuft in verkürzter Zeit in den Schmiermitteltank 40 zurück, wodurch ebenfalls die Schmiermittelmenge reduziert werden kann.

## Patentansprüche

1. Ölmanagementsystem für ein Fahrzeug, aufweisend
ein Differentialgehäuse,
ein Getriebegehäuse,
einen Schmiermitteltank,
eine Ansaugleitung,
eine Schmiermittelpumpe,
eine Luftansaugpumpe,
wobei das Getriebegehäuse mit dem Differentialgehäuse luftdicht verbunden ist, und ein Schmierstoffdurchlass zwischen dem Getriebegehäuse und dem Differentialgehäuse vorgesehen ist,
der Schmiermitteltank im Differentialgehäuse vorgesehen ist und eine Schmiermittelansaugöffnung in einem unteren Bereich aufweist, und
die Schmiermittelpumpe durch die Ansaugleitung Schmiermittel aus dem Schmiermitteltank befördert, und das Schmiermittel an die Schmiermittelstellen im Differentialgehäuse und Getriebegehäuse leitet, und
die Luftansaugpumpe Luft aus dem Schmiermitteltank in das Getriebegehäuse pumpt, so dass im Getriebegehäuse ein Luftüberdruck aufrechterhalten wird, und das Differentialgehäuse Umgebungsdruck aufweist, der niedriger ist, als der Luftüberdruck im Getriebegehäuse, und der Luftdruck im Schmiermitteltank niedriger ist, als der Umgebungsdruck im Differentialgehäuse,
so dass durch das Luftdruckgefälle der Schmierstoff aus dem Getriebegehäuse in das Differentialgehäuse und weiter in den Schmiermitteltank geleitet wird, wobei der Schmiermitteldurchlass eine Oberkante aufweist, die dazu ausgelegt ist, den Schmiermittelstand im Normalbetrieb derart zu regulieren, dass dieser unterhalb eines untersten sich drehenden Getriebebauteils liegt.

2. Ölmanagementsystem nach Anspruch 1, **dadurch gekennzeichnet, dass** der Schmiermitteltank ausgelegt ist, eine Differentialanordnung im Differentialgehäuse zu umgeben, derart, dass das Schmiermittel im Tank von der Differentialanordnung getrennt ist.

3. Ölmanagementsystem nach Anspruch 2, **dadurch gekennzeichnet, dass** die Schmiermittelansaugöffnung eine Oberkante aufweist, die dazu ausgelegt ist, den Schmiermittelstand derart zu regulieren, dass ein Zahnrad der Differentialanordnung des Differentialgehäuses im Normalbetrieb nicht im Schmiermittel planscht.

4. Ölmanagementsystem nach einem der vorangehenden Ansprüche, **dadurch gekennzeichnet, dass** der Schmiermitteltank in einer C-Form aufgebaut ist, die dazu geeignet ist, eine Differentialanordnung im Differentialgehäuse zu umschließen.

5. Ölmanagementsystem nach einem der vorangehenden Ansprüche, **dadurch gekennzeichnet, dass** die Luftansaugpumpe die Luft aus einem oberen Bereich des Schmiermitteltanks ansaugt.

6. Ölmanagementsystem nach einem der vorangehenden Ansprüche, **dadurch gekennzeichnet, dass** der Schmiermitteltank eine Durchgangsöffnung aufweist, die dazu ausgelegt ist, den Durchgang einer Welle zu ermöglichen.

7. Ölmanagementsystem nach einem der vorangehenden Ansprüche, **dadurch gekennzeichnet, dass** die Schmiermittelpumpe innerhalb des Differentialgehäuses vorgesehen ist.

8. Ölmanagementsystem nach einem der vorangehenden Ansprüche, **dadurch gekennzeichnet, dass** der Schmiermitteltank dazu ausgelegt ist, eine Differentialanordnung derart zu umgeben, dass der Schmiermitteltank als Spritzschutz dient.

9. Ölmanagementsystem nach einem der vorangehenden Ansprüche, **dadurch gekennzeichnet, dass** das Differentialgehäuse unmittelbar mit dem Getriebegehäuse luftdicht verbunden ist.

10. Ölmanagementsystem nach Anspruch 6, **dadurch gekennzeichnet, dass** die Welle eine Zapfwelle ist.

11. Ölmanagementsystem nach einem der vorangehenden Ansprüche, **dadurch gekennzeichnet, dass** die Luftansaugpumpe ungeregelt ist.

12. Ölmanagementsystem nach einem der vorangehenden Ansprüche 1 bis 10, **dadurch gekennzeichnet, dass** die Schmiermittelpumpe ungeregelt ist.

13. Ölmanagementsystem nach einem der vorangehenden Ansprüche, **dadurch gekennzeichnet, dass** die Schmiermittelansaugöffnung und die Schmiermitteldurchlassöffnung so ausgelegt sind, dass diese die größtmögliche Entfernung voneinander aufweisen.
